# EUROPEAN PATENT APPLICATION

(11) **EP 0 733 603 A1**
(43) Date of publication of application: **25.09.1996**
(21) Application number: 95104372.8
(22) Date of filing: 24.03.1995
(51) Int. Cl.: C04B 28/02, C04B 16/06, C04B 111/34

(54) **Mix for forming cast-in-place floors, cladding panels, or the like**

(71) Applicant: Milesi, Carla, I-20121 Milano (IT)
(72) Inventor: Milesi, Carla, I-20121 Milano (IT)
(74) Representative: Appoloni, Romano

(57) **Abstract**

A mix for forming cast-in-place floors, cladding panels, or the like, including: cement, concrete aggregates in granules, at least one coloring agent, an antishrinkage additive, a fluidifying additive, and fibers. The mix according to the invention is mixed with water and cast in place over a foundation to form a floor or into particular forms to produce cladding panels or the like. After drying, the surface of the cast is polished, obtaining particular color effects.

## Description

The present invention relates to a mix for forming cast-in-place floors, cladding panels, or the like.

It is known to build civil or industrial floors by using cast-in-place cement. One of the main problems in producing this type of floor is the danger of crack forming during drying. To avoid this danger, appropriate substances are added to the cement and the casting is given a thickness of generally no less than 5 cm. Due to this fact, floors formed by using cast-in-place cement have a considerable weight that significantly affects the construction of the load-bearing structure of the building.

An aim of the present invention is to provide a mix for forming cast-in-place floors that allows to build floors that are free from cracking problems although the thickness of the casting is reduced with respect to conventional values for building known types of concrete floors.

Within the scope of this aim, an object of the invention is to provide a mix that allows to obtain floors with particular color effects.

Another object of the invention is to provide a mix that can be used not only to make floors but also to form panels with exposed faces and, more generally, for furnishing indoor and outdoor spaces where limited thicknesses, polishing, lack of cracks, and limited color degradation in time are required.

This aim, these objects, and others which will become apparent hereinafter are achieved by a mix for forming cast-in-place floors, cladding panels, or the like, characterized in that it comprises: cement, cement aggregates in granules, at least one coloring agent, an antishrinkage additive, a fluidifying additive, and fibers.

White cement of the Portland 325 type which is commonly commercially available, can be conveniently used, preferably in the amount of 10% to 25% by weight with respect to the total amount of mix.

The concrete aggregates in granules can be preferably constituted by natural aggregates, such as for example marble grit; as an alternative, it is possible to use a grit obtained by mixing white cement, water, marble powder, and coloring agents, such as for example oxides, by casting the mix in forms, and by then crushing and screening the mix after drying, preferably a grit of the type disclosed in Italian patent no. 1,227,373.

If natural aggregates are used, their amount in the mix varies preferably between 70% and 87% by weight relative to the total amount of mix, whereas if granular concrete aggregates as mentioned above are used, their amount varies preferably between 40% and 70% by weight, again relative to the total amount of mix.

If granular concrete aggregates are used, it is possible to add marble powder, preferably in an amount substantially between 10% and 45% by weight relative to the total amount of mix, so as to produce a size distribution curve that is adapted for the purpose. The marble powder can be replaced with the powder produced by crushing said concrete aggregates or can be a mix of these two components.

If a natural aggregate such as for example marble grit is used, said aggregate is again preferably composed of a certain amount of powder and granules with different sizes, so as to obtain an adequate size distribution curve.

The coloring agents used can be oxides, which are commonly commercially available for coloring concrete products, in an amount that is variable according to the color effects to be obtained.

The fibers are preferably constituted by polyurethane fibers with a length of no less than 25 mm and are present in the mix in an amount that can vary between 0.4% and 1% with respect to the total weight of the mix.

The fluidifying additive used can be, for example, the fluidifying agent known by the trade-name "Superfluidificante NS", marketed by the company MAPEI S.p.A. of Milan. The antishrinkage additive can be constituted for example by the product known by the trade-name "AR" and marketed by the same company MAPEI S.p.A. Said "AR" additive is in practice a high-expansion product in powder form for making compensated-shrinkage concrete.

The amount of fluidifying additive is preferably 0.2% to 0.5% by weight and the amount of antishrinkage additive is preferably 0.8% to 1.5% by weight relative to the total amount of mix.

The mix according to the invention can be supplied with the cement, the concrete aggregates in granules, the antishrinkage additive, and the fibers already premixed together in the desired amounts; the fluidifying additive is added to the mix at the time of use.

The mix according to the invention is to be mixed by adding water in a variable amount according to the moisture content of the various components of the mix, so as to obtain a mixture having a pasty consistency; the mix is furthermore cast over a foundation of the conventional type for forming floors or into forms for making panels.

Prior to casting, the foundation is preferably coated with a grip-promoting agent to facilitate the adhesion of the casting to the foundation, such as for example the grip-promoting agent known by the trade-name "EPORIP", marketed by the company MAPEI S.p.A.; the casting is then coated, on its surface, with a curing product, such as for example the "ANTIEVAPOR" product marketed by said company MAPEI S.p.A.

Once the cast has dried, the floors or the exposed surface of the panels obtained with the mix according to the invention are polished, obtaining original and particularly pleasant color effects.

Two practical examples of composition of two mixes according to the invention, obtained by using granular concrete aggregates of the type disclosed in Italian patent no. 1,227,373 and natural aggregates, such as marble grit, are given hereinafter, merely by way of non-limitative indication.

### EXAMPLE 1

| | |
|---|---|
| Grit of the type disclosed in Italian patent no. 1,227,373 | 1,100 kg |
| Marble powder | 230 kg |
| Coloring agent (oxide) | 0.6 kg |
| Portland-type white cement | 325 kg |
| Fluidifying additive (Superfluidificante NS) | 18 kg |
| Antishrinkage additive (AR of the company MAPEI) | 6 kg |
| Polyurethane fibers, 25 mm long | 0.9 kg |

This mix was mixed with 100 liters of water and cast onto a foundation to form a floor measuring approximately 20 sq m, with a thickness of 2.5 cm. No cracking occurred during drying, and the floor thus formed was polished.

### EXAMPLE 2

| | |
|---|---|
| Aggregates: Powder | 40 kg |
| 1-mm granules | 77 kg |
| 2-mm granules | 44 kg |
| 4-mm granules | 112 kg |
| Portland-type white cement | 85 kg |
| Coloring agent (oxide) | 1.7 kg |
| Fluidifying additive (Superfluidificante NS) | 4.5 kg |
| Antishrinkage additive (AR of the company MAPEI) | 1.5 kg |
| Polyurethane fibers, 25 mm long | 0.26 kg |

This mix was mixed with approximately 20 liters of water and cast onto a foundation to form a floor measuring approximately 6 sq m, with a thickness of 2.5 cm. No cracking occurred during drying, and the floor thus formed was polished.

In practice it has been observed that the mix according to the invention fully achieves the intended aim, since it allow to produce cast-in-place floors that are significantly thinner than required by conventional concrete floors without danger of cracks, allowing to obtain new aesthetic effects and high-quality polishing.

The mix according to the invention, as mentioned, can also be used to form cladding panels or recessed panels meant to be polished on their exposed face to obtain particular color effects in the furnishing of indoor or outdoor spaces.

The mix thus conceived is susceptible of numerous modifications and variations, all of which are within the scope of the inventive concept; all the details may furthermore be replaced with other technically equivalent ones.

## Claims

1. Mix for forming cast-in-place floors, cladding panels, or the like, characterized in that it comprises: cement, concrete aggregates in granules, at least one coloring agent, an antishrinkage additive, and fibers.

2. Mix, according to claim 1, characterized in that it comprises a fluidifying additive.

3. Mix according to claim 1, characterized in that said granular aggregates are constituted by marble granules.

4. Mix according to one or more of the preceding claims, characterized in that said granular aggregates are present in an amount between 70% and 87% by weight relative to the total weight of the mix.

5. Mix according to claim 1, characterized in that said granular concrete aggregates are constituted by grit obtained by crushing colored concrete.

6. Mix according to claims 1 and 5, characterized in that it contains said concrete aggregates in an amount between 40% and 70% by weight relative to the total amount of mix.

7. Mix according to claims 1 and 5, characterized in that it comprises marble powder.

8. Mix according to claims 1 and 5, characterized in that it comprises concrete aggregates in powder form.

9. Mix according to claim 7 or 8, characterized in that the amount of said marble powder or of said concrete aggregates in powder form is between 10% and 45% by weight relative to the total amount of mix.

10. Mix according to one or more of the preceding claims, characterized in that said cement is white cement.

11. Mix according to one or more of the preceding claims, characterized in that it contains said cement in an amount between 10% and 25% by weight relative to the total amount of mix.

12. Mix according to one or more of the preceding claims, characterized in that said fibers are constituted by polyurethane fibers.

13. Mix according to one or more of the preceding claims, characterized in that said coloring agent is constituted by an oxide.

14. Mix according to one or more of the preceding claims, characterized in that it contains an amount of fluidifying additive that is between 0.2% and 0.5% by weight relative to the total amount of mix.

15. Mix according to one or more of the preceding claims, characterized in that it contains an amount of antishrinkage additive that is between 0.8% and 1.5% by weight relative to the total amount of mix.

16. Mix according to one or more of the preceding claims, characterized in that it contains an amount of fibers that is between 0.4% and 1% by weight relative to the total amount of mix.

17. Process for forming cast-in-place floors, characterized in that it consists in mixing in water a mix according to one or more of the preceding claims and in casting it over a foundation.

18. Process according to claim 17, characterized in that the foundation is treated with a grip-promoting agent before casting said mix with water mixed in.

19. Process according to claims 17 and 18, characterized in that the surface of the casting is covered with a curing product.

20. Process according to one or more of the preceding claims, characterized in that the cast is treated by polishing its surface after drying.
